# EUROPÄISCHE PATENTSCHRIFT

(11) **EP 1 091 463 B1**
(45) Veröffentlichungstag und Bekanntmachung des Hinweises auf die Patenterteilung: **09.11.2011**
(21) Anmeldenummer: 00119536.1
(22) Anmeldetag: 07.09.2000
(51) Int. Cl.: H02G 3/04, G02B 6/44

(54) **Kabelführungsrohr**
Cable guide tubing
Tube guide pour cable

(30) Priorität: 06.10.1999 DE 19948033
(43) Veröffentlichungstag der Anmeldung: 11.04.2001
(60) Teilanmeldung: 11170535.6
(73) Patentinhaber: Dipl.-Ing. Dr. Ernst Vogelsang GmbH & Co. KG, D-45699 Herten (DE)
(72) Erfinder: Vogelsang, Horst, 45699 Herten (DE)
(74) Vertreter: Nunnenkamp, Jörg

(56) Entgegenhaltungen:
- EP-A- 0 359 128
- EP-A- 0 870 963
- DE-C- 4 016 726

## Beschreibung

Die Erfindung betrifft ein Kabelführungsrohr aus thermoplastischem Kunststoff zur Aufnahme von Nachrichtenkabeln, insbesondere Glasfaserkabeln, mit einem im Querschnitt runden Kabelführungskanal und einer Kanalinnenwand mit Gleitrippen, welche in Richtung der Kanallängsachse unter Bildung von Wendepunkten alternierende Richtungen aufweisen. - Alternierende Richtungen bedeutet, dass der Verlauf der Gleitrippen, betrachtet in einer Projektion auf die Kanallängsachse des Kabelführungskanals, unterschiedlich ist, z.B. einmal von links nach rechts, einmal von rechts nach links weist. Dabei kann die Anordnung so getroffen sein, dass die Gleitrippen außerdem eine in Richtung der Kanallängsachse abschnittsweise unterschiedliche Steigung aufweisen. Die Gleitrippen können spiralförmig bzw. wendelförmig oder schlangenlinienförmig und im Übrigen parallel zueinander verlaufen.

Es sind derartige Kabelführungsrohre bekannt, bei denen die mit alternierender Richtung verlaufenden Gleitrippen dafür sorgen, dass störende tordierende Kräfte auf das in das Kabelführungsrohr einzuschiebende oder einzuziehende Nachrichtenkabel oder Kabelbündel nicht mehr einwirken. Die aus der Reibungswechselwirkung eines Nachrichtenkabels mit den Gleitrippen resultierenden Kräfte lassen störende Tordierungen nicht mehr aufkommen und heben sich bisweilen auch vollständig auf. Im Einzelnen können die Gleitrippen Gleitbereiche mit schraubenwendelförmig geführten Gleitrippenabschnitten bilden, die gegenläufigen Wendelsinn aufweisen. Die Gleitrippen können aber auch schlangenlinienförmig verlaufen und besitzen regelmäßig einen dreieckförmigen oder bogenförmigen Querschnitt (vgl. DE 40 16 726 C1).

Im Rahmen der gattungsbildenden Lehre nach der EP 0 870 963 A2 geht es um ein Rohr aus polymerem Werkstoff. Dieses dienst zur Aufnahme von Einzügen wie Kabel, Lichtwellenleiter etc.. Der innere Rohrumfang ist mit einer rippenartigen Struktur ausgerüstet. Zu diesem Zweck ist der innere glatte Rohrumfang in Teilsegmente aufgeteilt, welche durch zwischen den Teilsegmenten angeordnete Nuten voneinander getrennt sind. Die Nuten können axial auf die volle Länge des Schutzrohres ausgerichtet sein oder auch spiralförmig, bogenförmig oder in ähnlicher Anordnung am inneren Umfang des Schutzrohres angeordnet werden.

Die in ein solches Kabelführungsrohr eingezogenen, eingeschobenen oder eingeblasenen Nachrichtenkabel liegen über die Kabellänge regelmäßig auf mehreren Gleitrippen auf, weil diese schlangenlinienförmig oder schraubenwendelförmig mit gegenläufigem Wendesinn verlaufen. Problematisch können jedoch die von den Wendepunkten der Gleitrippen definierten Wende- bzw. Umkehrbereiche werden. Denn es ist nicht ausgeschlossen, dass Nachrichtenkabel mit einem verhältnismäßig kleinen Kabeldurchmesser in solchen Umkehrbereichen in das Rippental zwischen zwei benachbarten Gleitrippen fallen. Dadurch wird das Einschieben bzw. Einziehen oder Einblasen des betreffenden Nachrichtenkabels infolge erhöhter Reibungskräfte und reduzierter Gleitwirkung erheblich erschwert. Das gilt auch für den Fall, dass bei einem bereits mit Nachrichtenkabeln belegten Kabelführungsrohr diese Nachrichtenkabel zu einem späteren Zeitpunkt um eine weitere Strecke eingeschoben bzw. eingezogen oder eingeblasen werden müssen. Ähnlich Probleme können auch bei Nachrichtenkabeln mit größeren Kabeldurchmessern auftreten. Das hängt grundsätzlich von der Ausbildung und Anordnung der Gleitrippen ab. - Hier will die Erfindung Abhilfe schaffen.

Der Erfindung liegt die Aufgabe zugrunde, ein Kabelführungsrohr der eingangs beschriebenen Ausführungsform zu schaffen, bei dem sichergestellt ist, dass die einzuschiebenden, einzuziehenden oder einzublasenden Nachrichtenkabel auch in den Bereichen der Wendepunkte der Gleitrippen stets auf Gleitrippen aufliegen und folglich der Reibungswiderstand beim Einbringen der Nachrichtenkabel oder bei Wiederaufnahme der Kabeleinbringung beachtlich reduziert bleibt, und zwar unabhängig von dem Kabeldurchmesser der Nachrichtenkabel.

Diese Aufgabe löst die Erfindung bei einem Kabelführungsrohr der eingangs beschriebenen Ausführungsform dadurch, dass die Gleitrippenabstände zwischen den Kabelauflagepunkten im Bereich der Wendepunkte so gewählt sind, dass das jeweilige Nachrichtenkabel mit dem kleinsten Kabeldurchmesser im Bereich der Wendepunkte und folglich Umkehrstellen der Gleitbereiche im ungünstigsten Fall auf zumindest zwei benachbarten Gleitrippen aufliegt. - Im Rahmen der Erfindung meint Kabelauflagepunkte auch Kabelauflagelinien oder -flächen.

Diese Maßnahmen der Erfindung haben zur Folge, dass ein Einfallen selbst der Nachrichtenkabel mit dem kleinsten Durchmesser in das Rippental zweier benachbarter Gleitrippen im Bereich der Wendepunkte und folglich Umkehrstellen der Gleitbereiche mit Sicherheit vermieden wird, vielmehr auch dort stets eine Kabelauflage auf zwei Gleitrippen gewährleistet ist. Folglich bleibt eine beachtliche Reduzierung der Reibungskräfte im Zuge des Einschiebens oder Einziehens der betreffenden Nachrichtenkabel ebenso wie die bei der Wiederaufnahme der Kabeleinbringung bei einem bereits belegten Kabelführungsrohr unverändert aufrechterhalten. Stets ist einwandfreie Gleitwirkung auch für Nachrichtenkabel mit kleinen und kleinsten Kabeldurchmessern gewährleistet. Störende Tordierungen werden unverändert verhindert.

Weitere erfindungswesentliche Maßnahmen sind im Folgenden aufgeführt. So sieht die Erfindung vor, dass die Gleitrippen in Anpassung an unterschiedliche Kabeldurchmesser der Nachrichtenkabel unterschiedliche Gleitrippenabstände und unterschiedliche Gleitrippenabstände zwischen den Kabelauflagepunkten aufweisen, und dass die Gleitrippenabstände zwischen den Kabelauflagepunkten im Bereich der Wendepunkte so gewählt sind, dass Nachrichtenkabel mit unterschiedlichen Kabeldurchmessern im Bereich der Wendepunkte auf zumindest zwei Gleitrippen aufliegen. Nach dieser Ausführungsform der Erfindung wird folglich dafür Sorge getragen, dass insbesondere Nachrichtenkabel mit größeren Kabeldurchmessern als das Nachrichtenkabel mit dem kleinsten Kabeldurchmesser im Bereich der Wendepunkte der Gleitrippen im ungünstigsten Fall ebenfalls auf lediglich zwei Gleitrippen aufliegen, folglich auch dann nicht in ein Rippental fallen können, wenn größere Gleitrippenabstände und Gleitrippenhöhen verwirklicht sind. Stets ist folglich auch bei Nachrichtenkabeln mit größeren und unterschiedlichen Kabeldurchmessern gewährleistet, dass der Reibungswiderstand, den ein solches Nachrichtenkabel beim Einbringen oder bei Wiederaufnahme des Einbringens in das Kabelführungsrohr erfährt, in den Wendepunkt und folglich Umkehrbereichen erheblich reduziert bleibt.

Nach vorteilhafter Ausgestaltung können die Gleitrippen eine unterschiedliche Gleitrippenbreite im Bereich einer Gleitrippenbasis aufweisen. Außerdem sieht die Erfindung vor, dass die Gleitrippen mit unterschiedlicher Gleitrippenhöhe, unterschiedlicher Gleitrippenbreite im Bereich der Gleitrippenbasis und unterschiedlichen Gleitrippenabständen zwischen den Kabelauflagepunkten einen Führungsquerschnitt des Kabelführungskanals bilden, der in symmetrischer Anordnung über den Innenumfang des Kabelführungskanals verteilt ist. Auf diese Weise wiederholt sich der Führungsquerschnitt regelmäßig, so dass eine Ausrichtung des Kabelführungsrohres vor dem Einschieben oder Einziehen der Nachrichtenkabel nicht erforderlich ist, vielmehr in jeder beliebigen Lage des Kabelführungsrohres der oben definierte Führungsquerschnitt des Kabelführungskanals zur Verfügung steht.

Im Ergebnis wird nach Lehre der Erfindung ein Mehrrippensystem auch für die Wendepunktbereiche und folglich Umkehrbereiche verwirklicht, welches über den Innenumfang des Kabelkanals zur Verfügung steht.

Im Folgenden wird die Erfindung anhand einer lediglich ein Ausführungsbeispiel darstellenden Zeichnung näher erläutert. Es zeigen:
- Fig. 1: ausschnittsweise ein erfindungsgemäßes Kabelführungsrohr in pers- pektivischer Darstellung,
- Fig. 2: den Gegenstand nach Fig. 1 im Vertikalschnitt mit angedeutetem Nachrichtenkabel unterschiedlicher Kabeldurchmesser,
- Fig. 3: eine Abwicklung des Gegenstandes nach Fi. 2, ausschnittsweise,
- Fig. 4: einen Querschnitt durch den Gegenstand nach Fig. 3 im Bereich zwischen den Wendepunkten der schlangenlinienförmig verlaufenden Gleitrippen,
- Fig. 5: einen teilweisen Querschnitt durch den Gegenstand nach Fig. 3 in einem Wendepunktbereich, und zwar mit Kabelauflagepunkten im un- günstigsten Fall bei kleinstem Kabeldurchmesser,
- Fig. 6: den Gegenstand nach Fig. 5 mit einem größeren Kabeldurchmesser,
- Fig. 7: den Gegenstand nach Fig. 6 mit einem noch größeren Kabeldurch- messer, und
- Fig. 8: den Gegenstand nach Fig. 7 mit einem noch größeren Kabeldurch- messer.

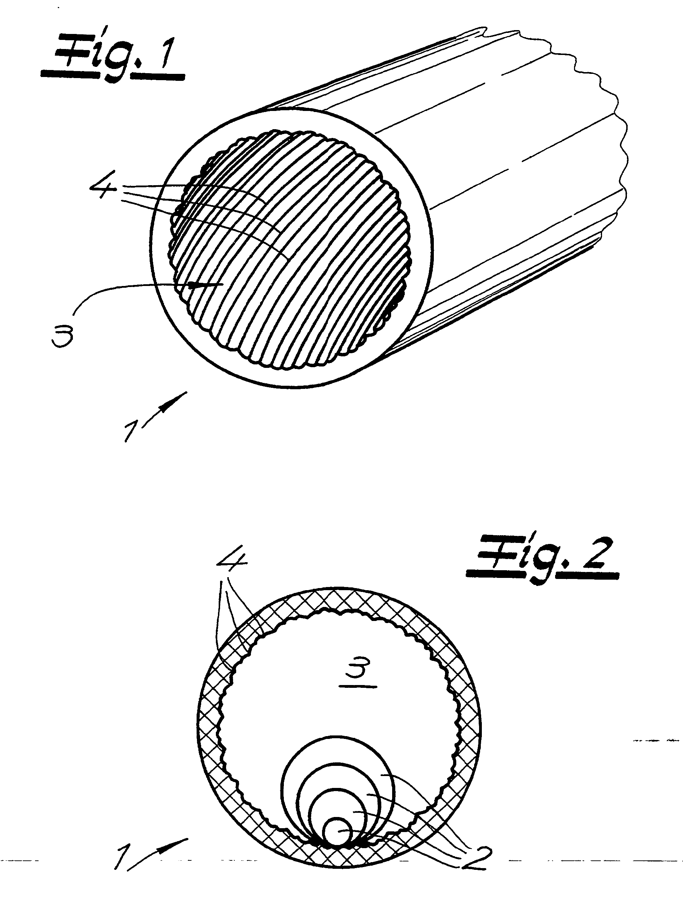

In den Figuren ist ein Kabelführungsrohr 1 aus thermoplastischem Kunststoff zur Aufnahme von Nachrichtenkabeln 2, insbesondere Glasfaserkabeln bzw. Lichtwellenleiter, dargestellt. Diese Kabelführungsrohr 1 weist einen im Querschnitt runden Kabelführungskanal 3 und eine Kanalinnenwand mit zueinander parallel verlaufenden Gleitrippen 4 auf, welche bezogen auf die Kanallängsachse und in Richtung der Kanallängsachse L unter Bildung von Wendepunkten 5 alternierende Richtungen aufweisen. Die Wendepunkte 5 der Gleitrippen 4 definieren Umkehrbereiche 6 zwischen den Gleitrippen 4. Nach dem Ausführungsbeispiel verlaufen die Gleitrippen 4 schlangenlinienförmig in Richtung der Kabellängsachse L und besitzen einen dreieckförmigen Querschnitt. Insoweit wird auf die Fig. 1 bis 3 verwiesen.

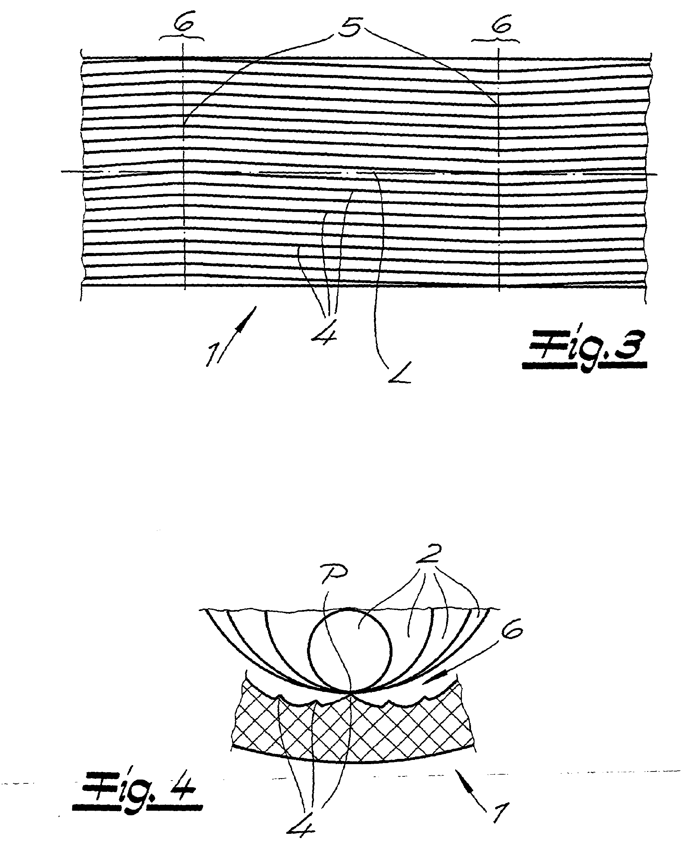

Nach Fig. 4 liegen die eingezogenen Nachrichtenkabel 2 zwischen den Wendepunktbereichen bzw. Umkehrbereichen 6 über die Länge des Kabelführungskanals 3 zwar auf verschiedenen Gleitrippen 4 auf, in dem dargestellten Querschnittsbereich des Kabelführungskanals 3 jedoch nur auf einer einzigen Gleitrippe 4, und zwar unabhängig vom jeweiligen Kabeldurchmesser.

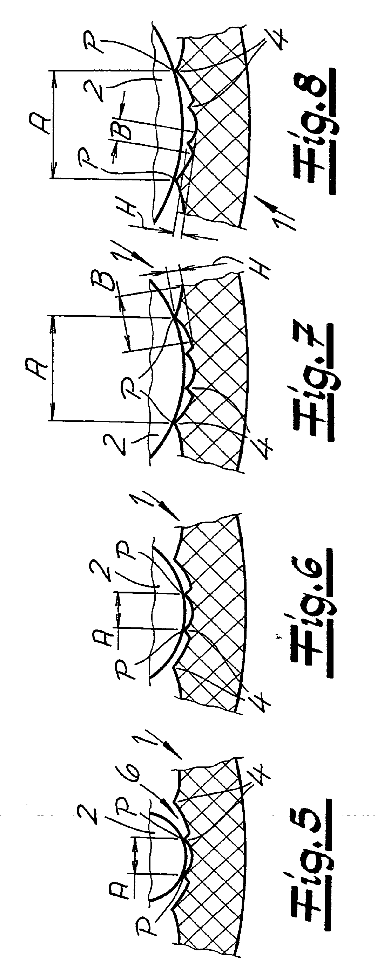

Bei der Ausführungsform nach Fig. 5 ist dafür Sorge getragen, dass die Gleitrippenabstände A zwischen den Kabelauflagepunkten P im Bereich der Wendepunkte 5 so gewählt sind, dass das jeweilige Nachrichtenkabel 2 mit dem kleinsten Kabeldurchmesser im Bereich der Wendepunkte 5 und folglich in den Umkehrbereichen 6 auf zumindest zwei benachbarten Gleitrippen 4 aufliegt und folglich nicht in das Rippental zwischen zwei Gleitrippen 4 fallen kann. Nach den Fig. 5 bis 8 weisen die Gleitrippen 4 in Anpassung an unterschiedliche Kabeldurchmesser der Nachrichtenkabel 2 unterschiedliche Gleitrippenhöhen H und unterschiedliche Gleitrippenabstände A zwischen den Kabelauflagepunkten P auf, wobei die Gleitrippenabstände A zwischen den Kabelauflagepunkten P im Bereich der Wendepunkte 5 der Gleitrippen 4 so gewählt sind, dass die Nachrichtenkabel 2 im Bereich der Wendepunkte 5 und folglich in den Umkehrbereichen 6 auf zumindest zwei Gleitrippen 4 aufliegen und zwar unabhängig von der Größe des jeweiligen Kabeldurchmessers. Die Gleitrippen 4 weisen eine unterschiedliche Gleitrippenbreite B im Bereich der Gleitrippenbasis auf, nämlich eine größere Gleitrippenbreite B bei größerer Gleitrippenhöhe H.

Die Gleitrippen 4 mit unterschiedlicher Gleitrippenhöhe H und unterschiedlicher Gleitrippenbreite B im Bereich der Gleitrippenbasis und unterschiedlichen Gleitrippenabständen A zwischen den Kabelauflagepunkten P bilden einen Führungsquerschnitt des Kabelführungskanals 3, der in symmetrischer Anordnung über den Innenumfang des Kabelführungskanals 3 verteilt ist. Das macht Fig. 2 deutlich.

Die Fig. 5 bis 8 zeigen die Gleitrippengeometrie mit den Kabelauflagepunkten P im Bereich der Wendepunkte 5 bzw. in den Umkehrbereichen 6, und zwar jeweils im ungünstigsten Fall.

## Patentansprüche

1. Kabelführungsrohr (1) aus thermoplastischem Kunststoff zur Aufnahme von Nachrichtenkabeln (2), insbesondere Glasfaserkabeln, mit einem im Querschnitt runden Kabelführungskanal (3) und einer Kanalinnenwand mit Gleitrippen (4), welche in Richtung der Kanallängsachse (L) unter Bildung von Wendepunkten (5) alternierende Richtungen aufweisen,
**dadurch gekennzeichnet, dass**
- die Gleitrippenabstände (A) zwischen den Kabelauflagepunkten (P) im Bereich der Wendepunkte (5) so gewählt sind, dass
- das Nachrichtenkabel (2) mit dem kleinsten Kabeldurchmesser im Bereich der Wendepunkte (5) auf zumindest zwei Gleitrippen (4) aufliegt.

2. Kabelführungsrohr (1) nach Anspruch 1, **dadurch gekennzeichnet, dass** die Gleitrippen (4) in Anpassung an unterschiedliche Kabeldurchmesser der Nachrichtenkabel (2) unterschiedliche Gleitrippenhöhen (H) und unterschiedliche Gleitrippenabstände (A) zwischen den Kabelauflagepunkten (P) aufweisen, und dass die Gleitrippenabstände (A) zwischen den Kabelauflagepunkten (P) im Bereich der Wendepunkte (5) so gewählt sind, dass die Nachrichtenkabel (2) im Bereich der Wendepunkte (5) auf zumindest zwei Gleitrippen (4) aufliegen.

3. Kabelführungsrohr (1) nach Anspruch 1 oder 2, **dadurch gekennzeichnet, dass** die Gleitrippen (4) eine unterschiedliche Gleitrippenbreite (B) im Bereich der Gleitrippenbasis aufweisen.

4. Kabelführungsrohr(1) nach einem der Ansprüche 1 bis 3, **dadurch gekennzeichnet, dass** die Gleitrippen (4) mit unterschiedlicher Gleitrippenhöhe (H), unterschiedlicher Gleitrippenbreite (B) im Bereich der Gleitrippenbasis und unterschiedlichen Gleitrippenabständen (A) zwischen den Kabelauflagepunkten (P) einen Führungsquerschnitt des Kabelführungskanals (3) bilden, der in symmetrischer Anordnung über den Innenumfang des Kabelführungskanals (3) verteilt ist.

## Claims

1. A cable guide tube (1) made of thermoplastic plastic for receiving communication cables (2), in particular glass fiber cables, having a cable guide channel (3), which is round in cross-section, and a channel inner wall having slide ribs (4), which have alternating directions in the direction of the channel longitudinal axis (L) while forming turning points (5),
**characterized in that**
- the slide rib distances (A) between the cable support points (P) in the area of the turning points (5) are selected so that
- the communication cable (2) having the smallest cable diameter rests on at least two slide ribs (4) in the area of the turning points (5).

2. The cable guide tube (1) according to Claim 1, **characterized in that** the slide ribs (4) have different slide rib heights (H) and different slide rib distances (A) between the cable support points (P) in adaptation to various cable diameters of the communication cables (2), and the slide rib distances (A) between the cable support points (P) in the area of the turning points (5) are selected so that the communication cables (2) rest on at least two slide ribs (4) in the area of the turning points (5).

3. The cable guide tube (1) according to Claim 1 or 2, **characterized in that** the slide ribs (4) have a different slide rib width (B) in the area of the slide rib base.

4. The cable guide tube (1) according to one of Claims 1 to 3, **characterized in that** the slide ribs (4) having different slide rib heights (H), different slide rib widths (B) in the area of the slide rib base, and different slide rib distances (A) between the cable support points (P) form a guide cross-section of the cable guide channel (3), which is distributed in a symmetrical arrangement around the inner circumference of the cable guide channel (3).

## Revendications

1. Conduit guide-câble (1) en plastique thermoplastique destiné à recevoir des câbles de télécommunications (2), en particulier des câbles en fibre de verre, comprenant un canal guide-câble (3) de section ronde et une paroi intérieure de canal avec des nervures de coulissement (4) qui présentent des directions alternantes, dans le sens de l'axe longitudinal du canal (L), en formant des tournants (5),
**caractérisé en ce que**
- les écarts des nervures de coulissement (A) entre les points de pose des câbles (P), au niveau des tournants (5), sont ainsi choisis que
- le câble de télécommunications (2) avec le diamètre de câble le plus petit repose sur au moins deux nervures de coulissement (4), au niveau des tournants (5).

2. Conduit guide-câble (1) selon la revendication 1, **caractérisé en ce que** les nervures de coulissement (4) présentent, en adaptation à différents diamètres des câbles de télécommunications (2), différentes hauteurs de nervures de coulissement (H) et différents écarts de nervures de coulissement (A) entre les points de pose des câbles (P), et **en ce que** les écarts de nervures de coulissement (A) entre les points de pose des câbles (P), au niveau des tournants (5), sont ainsi choisis que les câbles de télécommunications (2) reposent sur au moins deux nervures de coulissement (4), au niveau des tournants (5).

3. Conduit guide-câble (1) selon la revendication 1 ou 2, **caractérisé en ce que** les nervures de coulissement (4) présentent une largeur de nervure de coulissement (B) différente au niveau de la base des nervures de coulissement.

4. Conduit guide-câble (1) selon l'une des revendications 1 à 3, **caractérisé en ce que** les nervures de coulissement (4) avec une hauteur de nervure de coulissement (H) différente, une largeur de nervure de coulissement (B) différente au niveau de la base des nervures de coulissement et des écarts de nervures de coulissement (A) différents entre les points de pose des câbles (P), forment une section transversale de guidage du canal guide-câble (3) qui est répartie en agencement symétrique sur le pourtour intérieur du canal guide-câble (3).
